# EUROPEAN PATENT SPECIFICATION

(11) **EP 3 909 874 B1**
(45) Date of publication and mention of the grant of the patent: **01.05.2024**
(21) Application number: 19909220.6
(22) Date of filing: 06.03.2019
(51) Int. Cl.: G01B 11/00, G01B 11/04, G01B 11/06, B65B 9/06, B65B 9/02, B65B 57/12

(54) **MEASUREMENT CONTROL DEVICE, PACKAGING DEVICE IN WHICH SAME IS MOUNTED, AND MEASUREMENT CONTROL METHOD**
MESSSTEUERUNGSVORRICHTUNG, GEHÄUSEVORRICHTUNG, IN DER DIESE MONTIERT IST, UND MESSSTEUERUNGSVERFAHREN
DISPOSITIF DE COMMANDE DE MESURE, DISPOSITIF D'EMBALLAGE DANS LEQUEL CELUI-CI EST MONTÉ ET PROCÉDÉ DE COMMANDE DE MESURE

(30) Priority: 10.01.2019 JP 2019002770
(43) Date of publication of application: 17.11.2021
(73) Proprietor: OMRON Corporation, Shiokoji-dori, Shimogyo-ku, Kyoto-shi Kyoto 600-8530 (JP)
(72) Inventor: HIROHASHI Yuki, Kizugawa-shi, Kyoto 619-0283 (JP)
(74) Representative: Ter Meer Steinmeister & Partner
(86) International application number: PCT/JP2019/008827
(87) International publication number: WO 2020/144874

(56) References cited:
- WO-A1-2016/142710
- JP-A- H10 260 025
- JP-A- 2002 008 188
- JP-A- 2002 202 110
- JP-A- 2018 177 271
- JP-A- 2018 177 271
- JP-A- 2018 514 474
- US-A1- 2002 082 802
- US-A1- 2008 141 625

## Description

### Technical Field

The present disclosure relates to a measurement control device used for controlling a packaging device or the like, a packaging device equipped with the measurement control device, and a measurement control method.

### Background Art

In a conventional horizontal pillow type packaging device, a "film feed amount", an "operation of a seal part (an operation timing and an operation speed)", and an "operation of a supply conveyor" are set according to an article to be packaged based on data registered in advance as product information before an operation thereof or by creating the data.

Therefore, when the operation starts by performing setting according to a certain article to be packaged and then it is intended to package another article to be packaged having a different size, it is necessary to temporarily stop the packaging device and to reset the settings each time according to a size of each of the other articles to be packaged.

In this way, when the settings are changed every time the article to be packaged is changed, it takes a lot of time each time, and waste of a film occurs due to an adjustment of the film when the settings area changed.

In order to avoid frequent re-settings as described above, a setting may be made according to the largest one among the articles to be packaged, and a small article to be packaged may also be packaged with a film having the same size. In this case, along with a large amount of waste in the film, the small article to be packaged is present in a large film, and thus a problem that an "appearance" of the packaging is deteriorated is caused.

An invention described in Patent Literature 1 below (FIG. 7) has been proposed as a solution to the above-described problem. According to this invention, it is not necessary to perform re-setting each time the size of the article to be packaged becomes different, and film is not wasted. Moreover, it is possible to provide a pillow type packaging device capable of quickly performing packaging with a good appearance.

The pillow type packaging device described in Patent Literature 1 is a pillow type packaging device including a packaging device main body 50, and a supply conveyor C which is disposed upstream of the packaging device main body 50 and supplies an article G to be packaged to the packaging device main body 50. The pillow type packaging device includes an article detection sensor 60 which detects a length of the article G to be packaged, and a control device 70 which calculates an operation pattern of a sealing means of a top seal part, an operation timing, and a length of a film required for packaging based on the length of the article G to be packaged calculated based on data detected by the article detection sensor 60, and controls an operation of the sealing unit based on the calculated results thereof.

According to the pillow type packaging device described in Patent Literature 1, even when articles G to be packaged having different lengths are continuously supplied to the packaging device main body 50, data regarding the length of the article G to be packaged can be detected for each of the articles G to be packaged by the article detection sensor 60, and control can be performed such that top sealing is performed with the operation pattern and operation timings of the sealing unit of the top seal part suitable for the article G to be packaged based on the length of the film required for packaging calculated based on the detected data.

Therefore, even when articles G to be packaged having different lengths continuously enter, or even when articles G to be packaged having the same long or short length continuously enter, film packaging with an optimum length for all articles G to be packaged can be optimally performed.

Thus, it is not necessary to perform setting for each of the different articles G to be packaged, film is not wasted, and film packaging with a good appearance can be performed.

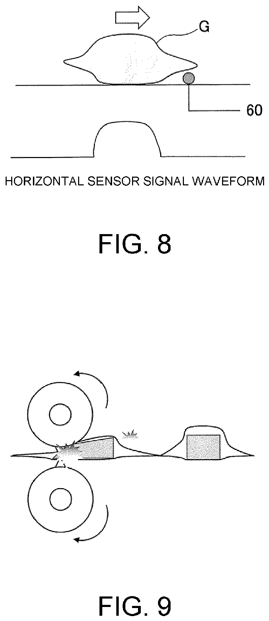

However, in the pillow type packaging device described in Patent Literature 1, the article detection sensor 60 is disposed in the horizontal direction to detect the length of the article G to be packaged. Therefore, for example, when an article G to be packaged having a shape shown in FIG. 8 enters, some of a light beam of the article detection sensor 60 passes under the article G to be packaged, and the length of the article G to be packaged cannot be accurately detected. Moreover, a height of the article G to be packaged cannot be accurately detected. In other words, there remains a problem that a size and a shape of the article G to be packaged cannot be accurately detected.

Therefore, there is a possibility that a problem as shown in FIG. 9 may occur.

That is, in the case of packaging crops of the same variety or bread of the same type, such as agricultural products and bread, which have different sizes and shapes for each of articles to be packaged, even in the pillow type packaging device described in Patent Literature 1, there remains a problem that it is difficult to optimally perform optimal film packaging.

US 2008/141625 A1 discloses a packaging system and associated components thereof, that provides an automatic detection of a full, overfull, closed or partially closed container, even when mixed with other containers. An exemplary packaging method includes the following steps: determining the dimensions of the container; detecting a height of the container and its contents in one or more locations within a scan area of an open side of the container; comparing the detected height of the container and/or its contents to pre-specified criteria; and when the detected height exceeds the pre-specified criteria, generating a signal that indicates that the scan area includes a height that exceeds the pre-specified criteria.

WO 2016/142710 A1 discloses a packaging system of enveloping articles, including a controller, a split conveyor for receiving and conveying an article to be enveloped and measuring means for detecting the width and height of the article. A pair of film sources is also provided, one of which feeds film above the article and the other of which feeds film to the underside of the article through the split in the conveyor. An end seamer operates in the split of the conveyor to seam opposed portions of film together to provide a closed end and a pair of side seamers operate to seam opposed portions of film together on either side of the article as it is conveyed along the conveyor, thereby to close the open sides of the wrapped film to envelop the article.

JP 2018 177271 A discloses a film packaging device and a film packaging method capable of facilitating adjustment when performing film packaging of an object to be packaged by using a two-folded film, and capable of packaging efficiently. This film packaging device includes a film former for opening a packaging film drawn out from a film roll, and fuse-cutting and welding device for fuse-cutting and welding the opening of the packaging film covered on a product. It further includes a film opening part adjustment device for setting an interval between a pair of film opening plates of the film former, a film guide movement device for moving the position of a film guide positioned on the lateral side of the film opening plates to an intermediate position of the film opening plates, together with an operation of the film opening part adjustment device, and a film roll movement device for moving the position of the film roll only by ½ of the movement distance of the pair of film opening plates.

US 2002/082802 A1 discloses an apparatus and method for weighing and non-contact measuring of dimensions of a stationary object, wherein the platen on which the object is placed for measuring and weighing is isolated from the support assembly for the dimension measuring sensors for greater sensitivity and accuracy in the weight determination.

### [Citation List]

### [Patent Literature]

[Patent Literature 1]
Japanese Patent No. 5325179

### [Summary of Invention]

### Technical Problem

The present disclosure has been made in view of the above-described problems, and provides a measurement control device, a packaging device equipped with the measurement control device, and a measurement control method capable of optimally performing optimum film packaging without wasting film and capable of performing film packaging with a good appearance, even in a case in which articles to be packaged that have different sizes and shapes, such as agricultural products and bread, are packaged.

### [Solution to Problem and Effect]

In order to achieve the above-described object, a measurement control device (1) according to the present disclosure comprises the features of claim 1. Preferred embodiments of the present invention are specified by the subclaims. This measurement control device is a measurement control device used for controlling a packaging device, in which
a sensor unit in which a detection axis of a sensor is disposed in a horizontal direction and a vertical direction orthogonal to a traveling direction in which an article to be packaged is conveyed is connected to a measurement control device main body, the measurement control device including:
a width/height calculation unit provided on a side of the measurement control device main body to calculate a distance between the sensor unit and the article to be packaged based on information from the sensor unit and to calculate a width and a height of the article to be packaged from the distance, and
a shape calculation unit configured to calculate a shape of the article to be packaged including a length thereof.

According to the measurement control device (1), since the detection axis of the sensor is disposed in the horizontal direction and the vertical direction, regardless of the shape of the article to be packaged, the size and the shape of the article to be packaged including a width, a height, and a length (including a contour length) can be accurately calculated. Thus, even in the case in which articles to be packaged having different sizes and shapes, such as agricultural products and bread, are packaged, it is possible to optically perform optimal film packaging, and film packaging with a good appearance can be performed without wasting the film.

Further, in the measurement control device (1), a measurement control device (2) according to the present disclosure may further include:
a control command creation unit configured to create a control command based on a control program, and
a drive control unit configured to control a drive unit such as a motor based on the control command.

According to the measurement control device (2), it is possible to realize accurate control based on accurate measurement, and thus even in the case in which articles to be packaged having different sizes and shapes, such as agricultural products and bread, are packaged, it is possible to optically perform optimal film packaging, and film packaging with a good appearance can be performed without wasting the film.

Also, in a measurement control device (3) according to the present disclosure, in any one of the measurement control devices (1) or (2), the sensor unit may be configured by selecting one or more of an optical sensor, an ultrasonic sensor, a mechanical sensor, and an image pickup sensor.

According to the measurement control device (3), it is possible to select an optimal sensor according to a type of the article to be packaged and a mounting situation, and it is possible to promote accurate detection of the article to be packaged.

Also, a packaging device according to the present disclosure is a packaging device equipped with the measurement control device described in any one of the measurement control devices (1) to (3).

According to the packaging device (1), since the detection axis of the sensor is disposed in the horizontal direction and the vertical direction, regardless of the shape of the article to be packaged, the size and the shape of the article to be packaged including the width, the height, and the length can be accurately calculated. Thus, even in the case in which articles having different sizes and shapes, such as agricultural products and bread, are packaged, it is possible to optically perform optimal film packaging, and film packaging with a good appearance can be performed without wasting the film.

Further, a measurement control method (1) according to the present disclosure is a measurement control method in the measurement control device described in any one of the measurement control devices (1) to (3), the method including:
a signal acquisition step of acquiring an information signal from the sensor unit;
a distance conversion step of converting the information signal acquired in the signal acquisition step into a distance,
a width/height calculation step of calculating the width and the height of the article to be packaged from distance information converted in the distance conversion step, and
an overall shape calculation step of further calculating the length, the width and the height of the article to be packaged, that is, an overall shape of the article to be packaged from the width and the height information of the article to be packaged obtained in the width/height calculation step.

According to the measurement control method (1), regardless of the shape of the article to be packaged, the size and shape of the article to be packaged including the width, the height, and the length can be accurately calculated. Thus, even in the case in which articles to be packaged having different sizes and shapes, such as agricultural products and bread, are packaged, it is possible to optically perform optimal film packaging, and film packaging with a good appearance can be performed without wasting the film.

Further, in the measurement control method (1), a measurement control method (2) according to the present disclosure further includes:
a control amount calculation step of calculating a control amount for a drive unit based on overall shape information of the article to be packaged obtained in the overall shape calculation step. The measurement control method may further include a control command creation step of creating a control command based on a calculation result obtained in the control amount calculation step, and
an output process step of performing an output process of the control command created in the control command creation step.

According to the measurement control method (2), it is possible to realize accurate control based on accurate measurement, and thus even in the case in which articles to be packaged having different sizes and shapes, such as agricultural products and bread, are packaged, it is possible to optically perform optimal film packaging, and film packaging with a good appearance can be performed without wasting the film.

### [Brief Description of Drawings]

FIG. 1 is a perspective view schematically showing an arrangement of a measurement control device according to an embodiment.
FIG. 2 is a schematic side view showing an example in which a measurement control device according to the embodiment is applied to a packaging device.
FIG. 3 is a functional block diagram showing a configuration of the measurement control device according to the embodiment.
FIG. 4 is a flowchart showing an example of a process operation of the measurement control device according to the embodiment.
FIG. 5 is a graph showing a case in which a length of an article to be packaged is calculated and obtained.
FIG. 6 is a side view showing a state in which the article to be packaged is sensed by the measurement control device.
FIG. 7 is a side view showing a configuration example of a conventional packaging device.
FIG. 8 is a side view showing a situation in which an article to be packaged is sensed using a conventional measurement control device.
FIG. 9 is a side view showing a state which can occur as a result of sensing an article to be packaged using the conventional measurement control device.

### [Description of Embodiments]

Hereinafter, embodiments of a measurement control device and a packaging device equipped with the measurement control device according to the present disclosure will be described with reference to the drawings.

### [Configuration example of sensor unit]

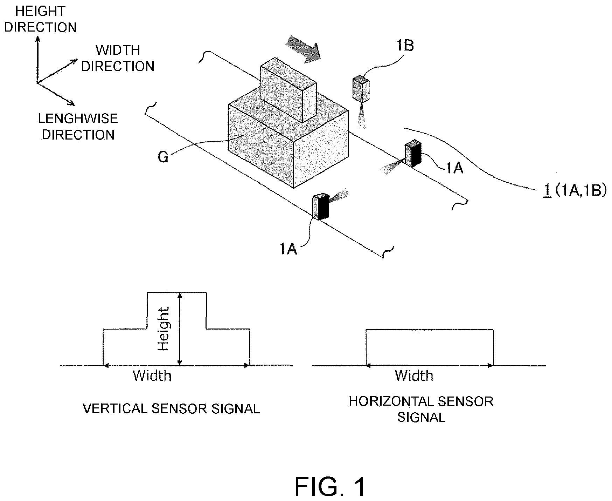

FIG. 1 is a schematic perspective view showing an arrangement example of a sensor unit of a measurement control device according to an embodiment.

Two sensors 1A and 1A are disposed in a horizontal direction orthogonal to a traveling direction in which an article G to be packaged is conveyed, one sensor (1B) is disposed in a vertical direction, and a sensor unit 1 is configured of the sensors 1A and 1A and the sensor 1B.

An optical type sensor or another type, for example, an ultrasonic sensor type or a mechanical type (a limit switch type) can be adopted as the sensors constituting the sensor unit 1. Further, in addition to an optical sensor, an image pickup device type sensor which can recognize an image can be used as the optical type sensor.

With such an arrangement, a width of the article G to be packaged can be accurately detected by the two sensors 1A and 1A disposed in the horizontal direction. Further, a height of the article G to be packaged can be accurately detected by the sensor 1B disposed in the vertical direction. When a calculation described later is performed based on the detected data, the width, the height, and the length of the article G to be packaged, in other words, an overall shape of the article G to be packaged can be accurately obtained by the calculation.

### [Application example of measurement control device]

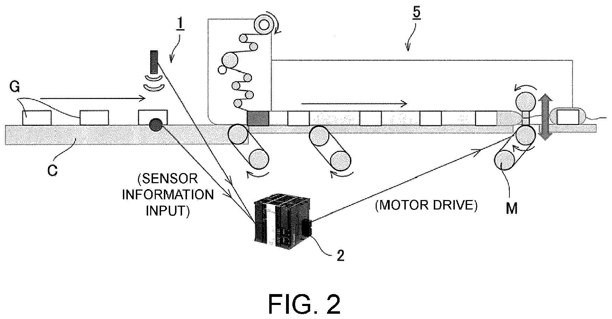

FIG. 2 is a schematic side view showing a packaging device equipped with a measurement control device according to the embodiment, and the sensor unit 1 is disposed on the upstream side of a packaging device main body 5.

A measurement control device main body 2 receives a detection signal from the sensor unit 1, calculates the shape of the article G to be packaged, determines a control amount (a film length, a cut position, and the like) from the calculation results thereof, and drives a motor M on the packaging device main body 5 side based on the control amount thereof.

### [System configuration example]

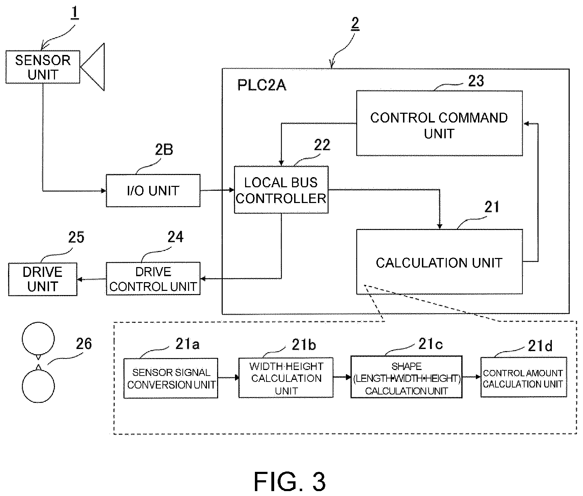

FIG. 3 is a functional block diagram showing a system configuration of the measurement control device according to the embodiment, and the sensor unit 1 is connected to a programmable logic controller (PLC) 2A via an I/O unit 2B. The PLC 2A is configured of one or more computers including a central processing unit (CPU), a random access memory (RAM), and a read only memory (ROM), and is configured to include a calculation unit 21, a local bus controller 22, and a control command unit 23 as functional blocks.

The calculation unit 21 performs various calculations, but in the case of the present embodiment, the calculation unit 21 is further divided into functional blocks, and is configured to include:
a sensor signal conversion unit 21a which processes a signal from the sensor unit 1 so that a calculation of the calculation unit 21 is enabled,
a width/height calculation unit 21b which calculates a width and a height of the article G to be packaged from the sensor signal,
a length/width/height calculation unit 21c which further calculates a length, the width and the height of the article G to be packaged from the sensor signal, and
a control amount calculation unit 21d which calculates a film length, a cut position, a control amount of a drive unit 25, and the like from the obtained length, width and height of the article G to be packaged.

The I/O unit 2B to which the sensor unit 1 is connected is connected to the local bus controller 22, and the local bus controller 22 is connected to the calculation unit 21. The local bus controller 22 controls a bus line which connects each of the functional blocks inside the PLC 2A, and controls the bus line so that functions of the PLC 2A are fully exhibited.

The calculation unit 21 is connected to the control command unit 23, and the control command unit 23 is connected to the local bus controller 22. The calculation unit 21 has a function of performing almost all of various calculation processes inside the PLC 2A, and performs many calculation processes including the above-described calculation processes.

The local bus controller 22 is also connected to a drive control unit 24 outside the PLC 2A, and the drive control unit 24 is connected to the drive unit 25. The drive unit 25 is configured to drive a cutter 28 and the like.

### [Process operation example]

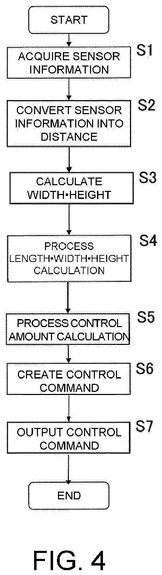

FIG. 4 is a flowchart showing an example of a process operation in the calculation unit 21 of the measurement control device according to the embodiment.

First, In Step S1, acquisition of an information signal from the sensor unit 1 start.

When the acquisition of the information signal from the sensor unit 1 is completed in Step S1, the process proceeds to Step S2, and in Step S2, the information signal from the sensor unit 1 is converted into a distance.

When the information signal from the sensor unit 1 is converted into a distance in Step S2, the process proceeds to Step S3, and the width and the height of the article G to be packaged are calculated from the distance information converted in Step S2.
Next, the process proceeds to step S4, and the width, the height and the length (including a contour length), that is, an overall shape and profile of the article G to be packaged are calculated from the width and height information of the article G to be packaged obtained in Step S3.

Next, the process proceeds to step S5, and a process of calculating a control amount (a film length, a determination of a cut position, a drive amount of the drive unit 25, and the like) with respect to the drive unit 25 is performed based on the overall shape and profile information of the article G to be packaged obtained in Step S4.

Next, the process proceeds to step S6, a control command is created based on the calculation results obtained in Step S5, then the process proceeds to Step S7, an output process of the control command is performed in Step S7, and then the process operation is terminated.

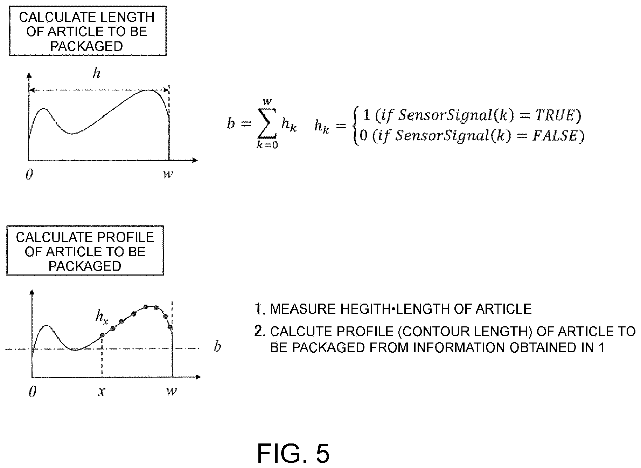

FIG. 5 is a graph showing a process of obtaining the contour length of the article G to be packaged by a calculation. First, the length of the article G to be packaged is obtained by a determination of whether or not a signal of the sensor can be detected. Additionally, the height of each of plot points is also obtained. The contour length of the article G to be packaged can be obtained by integrating the obtained height and length information. At the same time, since the width information at each of the plot points is also obtained, the overall shape (profile) of the article G to be packaged is obtained.

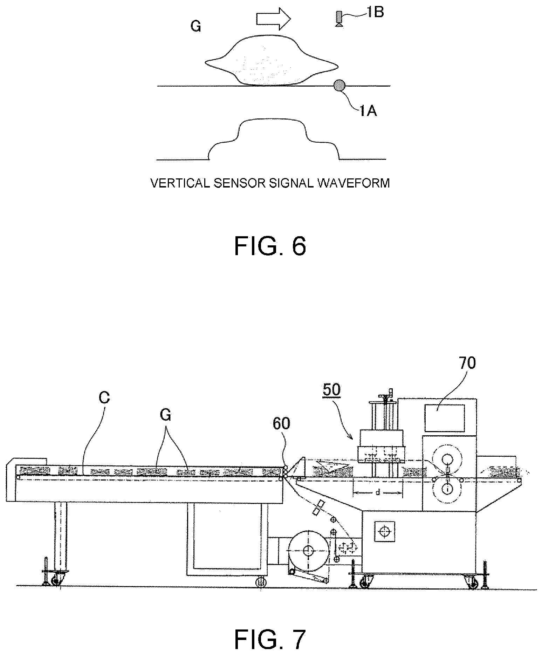

FIG. 6 is a side view showing a state in which the article G to be packaged shaped like a croissant is sensed by the measurement control device according to the present embodiment.

When the article G to be packaged having the shape shown in the drawing is sensed, it is impossible to obtain an accurate length of the article G to be packaged with the conventional one (refer to FIG. 8), but it is shown that the length, the width, the height, and the contour length (the overall profile) of the article G to be packaged can be accurately obtained using the measurement control device according to the present embodiment.

According to the measurement control device according to the above-described embodiment, since the sensor unit is disposed in the horizontal direction and the vertical direction, it is possible to accurately calculate the size and shape of the article to be packaged including the width, the height, and the length (including the contour length). Thus, even in the case in which articles to be packaged having different sizes and shapes, such as agricultural products and bread, are packaged, it is possible to optically perform optimal film packaging, and film packaging with a good appearance can be performed without wasting the film.

### [Modification example]

Although the embodiments of the present disclosure have been described above in detail, the above description is merely an example of the present disclosure in all respects. Needless to say, various improvements and changes can be made without departing from the scope of the present disclosure.

For example, in the above-described embodiment, the number of sensors 1B disposed in the vertical direction is one, but in another embodiment, a plurality of sensors 1B may be disposed, and detection accuracy due to the sensor 1B can be further improved by disposing the plurality of sensors 1B.

### [Industrial Applicability]

The present disclosure can be widely used in industrial fields such as packaging lines for film packaging of an article to be packaged, or a packaging system including the packaging lines.

### [Reference Signs List]

1 Sensor unit
1A Sensor (horizontal direction)
1B Sensor (vertical direction)
2 Measurement control device main body
2A PLC
2B I/O unit
21 Calculation unit
21a Sensor signal conversion unit
21b Width/height calculation unit
21c Length/width/height/calculation unit
21d Control amount calculation unit
22 Local bus controller
23 Control command unit
24 Drive control unit
25 Drive unit
26 Cutter
M Motor
5 Packaging device main body
50 Packaging device main body
60 Article detection sensor
70 Control device
C Supply conveyance
G Article to be packaged

## Claims

1. A measurement control device used for controlling a packaging device (5) comprising a supply conveyor (C) for conveying an article (G) to be packaged along a traveling direction, the measurement control device comprising:
a sensor unit (1) comprising two sensors (1A, 1A) disposed in a horizontal direction orthogonal to the traveling direction in which the article (G) to be packaged is conveyed by the supply conveyor (C), and one or a plurality of sensors (1B) disposed in a vertical direction, and
a measurement control device main body (2), wherein the sensor unit (1) is connected to the measurement control device main body (2), wherein the measurement control device main body (2) comprises:
a width/height calculation unit (21b) provided on a side of the measurement control device main body (2) calculating a distance between the sensor unit (1) and the article (G) to be packaged based on information from the sensor unit (1) and to calculate a width and a height of the article (G) to be packaged from the distance;
**characterised in that** the measurement control device main body (2) further comprises:
a shape calculation unit (21c) configured to calculate a shape of the article (G) to be packaged, comprising the length, width and height thereof, from the width and the height of the article (G) to be packaged calculated by the width/height calculation unit (21b), and
a control amount calculation unit (21d) configured to calculate a length of a film required for the article (G) to be packaged and a control amount of a drive unit (25) from the shape of the article (G) to be packaged obtained from the shape calculation unit (21c).

2. The measurement control device according to claim 1, further comprising:
a control command creation unit (23) being connected to the control amount calculation unit (21d) and configured to create a control command based on the calculated control amount; and
a drive control unit (24) configured to control a drive unit (25) such as a motor (M) based on the control command.

3. The measurement control device (2) according to claim 1, wherein the sensor unit (1) is configured by selecting one or more of an optical sensor, an ultrasonic sensor, a mechanical sensor, and an image pickup sensor.

4. A packaging device (5) which is equipped with the measurement control device (2) according to any one of claims 1 to 3.

5. A measurement control method in the measurement control device (2) according to any one of claims 1 to 3, the method **characterized by** comprising:
a signal acquisition step (S1) of acquiring information signal from the sensor unit (1);
a distance conversion step (S2) of converting the information signal acquired in the signal acquisition step into a distance;
a width/height calculation step (S3) of calculating the width and the height of the article (G) to be packaged from distance information converted in the distance conversion step;
an overall shape calculation step (S4) of further calculating the length, the width and the height of the article (G) to be packaged, that is, an overall shape of the article (G) to be packaged from the width and the height information of the article (G) to be packaged obtained in the width/height calculation step; and
a control amount calculation step (S5) of calculating a length of a film required for the article (G) to be packaged and a control amount for a drive unit (25) based on overall shape information of the article (G) to be packaged obtained in the overall shape calculation step (S4).

6. The measurement control method according to claim 5, further comprising:
a control command creation step (S6) of creating a control command based on a calculation result obtained in the control amount calculation step (S5); and
an output process step (S7) of performing an output process of the control command created in the control command creation step (S6).

## Patentansprüche

1. Messsteuervorrichtung, die verwendet wird, um eine Verpackungsvorrichtung (5) zu steuern, die ein Versorgungsförderband (C) zum Befördern eines zu verpackenden Artikels (G) entlang einer Bewegungsrichtung umfasst, wobei die Messsteuervorrichtung umfasst:
eine Sensoreinheit (1), die zwei Sensoren (1A, 1A), die in einer horizontalen Richtung senkrecht zu der Bewegungsrichtung, in die der zu verpackende Artikel (G) durch das Versorgungsförderband (C) befördert wird, angeordnet sind, und einen oder mehrere Sensoren (1B), die in einer vertikalen Richtung angeordnet sind, umfasst, und
einen Messsteuervorrichtungs-Hauptkörper (2), wobei die Sensoreinheit (1) mit dem Messsteuervorrichtungs-Hauptkörper (2) verbunden ist,
wobei der Messsteuervorrichtungs-Hauptkörper (2) umfasst:
eine Breiten-/Höhenberechnungseinheit (21b), die auf einer Seite des Messsteuervorrichtungs-Hauptkörpers (2) vorgesehen ist und einen Abstand zwischen der Sensoreinheit (1) und dem zu verpackenden Artikel (G) anhand von Informationen von der Sensoreinheit (1) berechnet, und um eine Breite und eine Höhe des zu verpackenden Artikels (G) aus dem Abstand zu berechnen;
**dadurch gekennzeichnet, dass** der Messsteuervorrichtungs-Hauptkörper (2) ferner umfasst:
eine Formberechnungseinheit (21c), die konfiguriert ist, eine Form des zu verpackenden Artikels (G), die seine Länge, Breite und Höhe umfasst, aus der Breite und der Höhe des zu verpackenden Artikels (G), die durch die Breiten-/Höhenberechnungseinheit (21b) berechnet werden, zu berechnen, und
eine Steuerbetrag-Berechnungseinheit (21d), die konfiguriert ist, eine Länge eines Films, die für den zu verpackenden Artikel (G) benötigt wird, und einen Steuerbetrag einer Ansteuerungseinheit (25) aus der Form des zu verpackenden Artikels, die von der Formberechnungseinheit (21c) erhalten wird, zu berechnen.

2. Messsteuervorrichtung nach Anspruch 1, die ferner umfasst:
eine Steuerbefehl-Erzeugungseinheit (23), die mit der Steuerbetrag-Berechnungseinheit (21d) verbunden ist und konfiguriert ist, einen Steuerbefehl anhand des berechneten Steuerbetrags zu erzeugen; und
eine Ansteuerungssteuereinheit (24), die konfiguriert ist, eine Ansteuerungseinheit (25), wie etwa einen Motor (M), anhand des Steuerbefehls zu steuern.

3. Messsteuervorrichtung (2) nach Anspruch 1, wobei die Sensoreinheit (1) durch Auswählen eines oder mehrerer eines optischen Sensors, eines Ultraschallsensors, eines mechanischen Sensors und eines Bildaufnahmesensors konfiguriert wird.

4. Verpackungsvorrichtung (5), die mit der Messsteuervorrichtung (2) nach einem der Ansprüche 1 bis 3 ausgestattet ist.

5. Messsteuerverfahren in der Messsteuervorrichtung (2) nach einem der Ansprüche 1 bis 3, wobei das Verfahren **dadurch gekennzeichnet ist, dass** es umfasst:
einen Signalerfassungsschritt (S1) zum Erfassen eines Informationssignals von der Sensoreinheit (1);
einen Abstandsumsetzungsschritt (S2) zum Umsetzen des in dem Signalerfassungsschritt erfassten Informationssignals in einen Abstand;
einen Breiten-/Höhen-Berechnungsschritt (S3) zum Berechnen der Breite und der Höhe des zu verpackenden Artikels (G) aus den in dem Abstandsumsetzungsschritt umgesetzten Abstandsinformationen;
einen Gesamtform-Berechnungsschritt (S4) zum weiteren Berechnen der Länge, der Breite und der Höhe des zu verpackenden Artikels, das heißt, einer Gesamtform des zu verpackenden Artikels (G) aus den Breiten- und den Höheninformationen des zu verpackenden Artikels (G), die in dem Breiten-/Höhen-Berechnungsschritt erhalten werden; und
einen Steuerbetrag-Berechnungsschritt (S5) zum Berechnen einer Länge eines Films, die für den zu verpackenden Artikel (G) benötigt wird, und eines Steuerbetrags für eine Ansteuerungseinheit (25) anhand der Gesamtforminformationen des zu verpackenden Artikels (G), die in dem Gesamtform-Berechnungsschritt (S4) erhalten werden.

6. Messsteuerverfahren nach Anspruch 5, das ferner umfasst:
einen Steuerbefehl-Erzeugungsschritt (S6) zum Erzeugen eines Steuerbefehls anhand eines Berechnungsergebnisses, das in dem Steuerbetrag-Berechnungsschritt (S5) erhalten wird; und
einen Ausgabevorgangsschritt (S7) zum Ausführen eines Ausgabevorgangs des in dem Steuerbefehl-Erzeugungsschritt (S6) erzeugten Steuerbefehls.

## Revendications

1. Dispositif de commande de mesure utilisé pour commander un dispositif d'emballage (5) comportant un convoyeur d'alimentation (C) pour transporter un article (G) à emballer le long d'une direction de déplacement, le dispositif de commande de mesure comportant :
une unité à capteurs (1) comportant deux capteurs (1A, 1A) disposés dans une direction horizontale orthogonale à la direction de déplacement dans laquelle l'article (G) à emballer est transporté par le convoyeur d'alimentation (C), et un capteur ou une pluralité de capteurs (1B) disposés dans une direction verticale, et
un corps principal de dispositif de commande de mesure (2), dans lequel l'unité à capteurs (1) est reliée au corps principal de dispositif de commande de mesure (2),
dans lequel le corps principal de dispositif de commande de mesure (2) comporte :
une unité de calcul de largeur/hauteur (21b) agencée sur un côté du corps principal de dispositif de commande de mesure (2) calculant une distance entre l'unité à capteurs (1) et l'article (G) à emballer sur la base d'informations provenant de l'unité à capteurs (1) et pour calculer une largeur et une hauteur de l'article (G) à emballer à partir de la distance ;
**caractérisé en ce que** le corps principal de dispositif de commande de mesure (2) comporte en outre :
une unité de calcul de forme (21c) configurée pour calculer une forme de l'article (G) à emballer, comportant la longueur, la largeur et la hauteur de celui-ci, à partir de la largeur et de la hauteur de l'article (G) à emballer calculées par l'unité de calcul de largeur/hauteur (21b), et
une unité de calcul de quantité de commande (21d) configurée pour calculer une longueur d'un film requis pour l'article (G) à emballer et une quantité de commande d'une unité d'entraînement (25) à partir de la forme de l'article (G) à emballer obtenue à partir de l'unité de calcul de forme (21c).

2. Dispositif de commande de mesure selon la revendication 1, comportant en outre :
une unité de création d'instruction de commande (23) étant reliée à l'unité de calcul de quantité de commande (21d) et configurée pour créer une instruction de commande basée sur la quantité de commande calculée ; et
une unité de commande d'entraînement (24) configurée pour commander une unité d'entraînement (25) telle qu'un moteur (M) sur la base de l'instruction de commande.

3. Dispositif de commande de mesure (2) selon la revendication 1, dans lequel l'unité à capteurs (1) est configurée en sélectionnant un ou plusieurs capteurs parmi un capteur optique, un capteur ultrasonore, un capteur mécanique ou un capteur de prise d'images.

4. Dispositif d'emballage (5) qui est équipé du dispositif de commande de mesure (2) selon l'une quelconque des revendications 1 à 3.

5. Procédé de commande de mesure dans le dispositif de commande de mesure (2) selon l'une quelconque des revendications 1 à 3, le procédé étant **caractérisé en ce qu'**il comporte :
une étape d'acquisition de signal (S1) consistant à acquérir un signal d'information provenant de l'unité à capteurs (1) ;
une étape de conversion de distance (S2) consistant à convertir le signal d'information acquis à l'étape d'acquisition de signal en une distance ;
une étape de calcul de largeur/hauteur (S3) consistant à calculer la largeur et la hauteur de l'article (G) à emballer à partir de l'information de distance convertie à l'étape de conversion de distance ;
une étape de calcul de forme globale (S4) consistant à calculer en outre la longueur, la largeur et la hauteur de l'article (G) à emballer, qui est une forme globale de l'article (G) à emballer à partir des informations de largeur et de hauteur de l'article (G) à emballer obtenues à l'étape de calcul de largeur/hauteur ; et
une étape de calcul de quantité de commande (21) consistant à calculer une longueur d'un film requis pour l'article (G) à emballer et une quantité de commande pour une unité d'entraînement (25) sur la base de l'information de forme globale de l'article (G) à emballer obtenue à l'étape de calcul de forme globale (S4).

6. Procédé de commande de mesure selon la revendication 5, comportant en outre :
une étape de création d'instruction de commande (S6) consistant à créer une instruction de commande basée sur un résultat de calcul obtenu à l'étape de calcul de quantité de commande (S5) ; et
une étape de processus de sortie (S7) consistant à exécuter un processus de sortie de l'instruction de commande créée à l'étape de création d'instruction de commande (S6).
